# EUROPÄISCHE PATENTSCHRIFT

(11) **EP 2 177 791 B1**
(45) Veröffentlichungstag und Bekanntmachung des Hinweises auf die Patenterteilung: **23.10.2013**
(21) Anmeldenummer: 09171753.8
(22) Anmeldetag: 30.09.2009
(51) Int. Cl.: F16H 61/04, F16H 61/70, F16H 63/34

(54) **Verfahren zum Schalten einer Bereichsgruppe eines Mehrgruppengetriebes**
Method for shifting a group of a multi-group transmission
Procédé de commutation d'un groupe d'une transmission à groupes multiples

(30) Priorität: 20.10.2008 DE 102008042958
(43) Veröffentlichungstag der Anmeldung: 21.04.2010
(60) Teilanmeldung: 13175539.9
(73) Patentinhaber: ZF Friedrichshafen AG, 88038 Friedrichshafen (DE)
(72) Erfinder: Bader, Josef, 88045, Friedrichshafen (DE); Miller, Martin, 88090, Immenstaad (DE)

(56) Entgegenhaltungen:
- WO-A1-02/064996
- WO-A1-2007/128689
- DE-A1- 4 026 659
- DE-A1-102005 022 995
- FR-A1- 2 551 168
- US-A1- 2008 236 322

## Beschreibung

Die vorliegende Erfindung betrifft ein Verfahren zum Schalten einer Bereichsgruppe eines Mehrgruppengetriebes gemäß dem Oberbegriff des Patentanspruchs 1.

Insbesondere im Antriebsstrang von Nutzfahrzeugen werden häufig automatisierte Mehrgruppengetriebe mit einer vorgeschalteten Splitgruppe, einem Hauptgruppe und einer nachgeschalteten Bereichsgruppe eingesetzt. Durch die Bereichsgruppe mit einem langsamen und einem schnellen Bereich kann die Gangzahl aus Split- und Hauptgruppe verdoppelt werden. Zum Wechsel zwischen dem langsamen und dem schnellen Bereich des Mehrgruppengetriebes kann die Bereichsgruppe während einer Zugkraftunterbrechung umgeschaltet werden, indem eine Getriebeeingangswelle der Bereichsgruppe während des Schaltvorgangs durch eine Kupplung von einer Antriebsmaschine getrennt wird. Der gewünschte Bereich kann dann mit Hilfe einer Schaltanordnung eingeschaltet werden, indem die Schaltverzahnung einer Schiebemuffe in die Kuppelverzahnung eines Kupplungskörpers geschoben wird, wobei der Kupplungskörper drehfest an einem mit der Schiebemuffe zu verbindenden Getriebeelement befestigt ist, z. B. an einem Planetenträger oder am Getriebegehäuse.

Wird in der Bereichsgruppe von dem einen Bereich zu dem anderen Bereich gewechselt, müssen die zu verbindenden Getriebeelemente während des Schaltvorganges auf eine annähernd gleiche Drehzahl gebracht werden, bevor die Schaltverzahnung der Schiebemuffe in die Kuppelverzahnung des zu schaltenden Kupplungskörpers eingreifen kann. Eine solche Drehzahlangleichung kann entweder mit Hilfe einer mechanischen Synchronisierung oder, z. B. bei einer Klauenschaltung, durch eine präzise geregelte Führung der Dreh-zahlen der miteinander zu kuppelnden Getriebeelemente auf einen zumindest annähernd gleichen Wert erreicht werden. Eine Schaltanordnung mit mechanischer Synchronisierung erlaubt schnellere Schaltungen, weil ohne Zwischenstopp von einer Endstellung in die andere Endstellung geschaltet wird. Der Aufbau einer derartigen Schaltanordnung ist jedoch verhältnismäßig aufwändig. Eine als Klauenschaltung ausgeführte Schaltanordnung mit präziser Drehzahlangleichung über die Ansteuerung des Antriebsmotors bzw. der Getriebebremse erfordert einen höheren steuerungstechnischen Aufwand, sowie einen größeren Zeitbedarf, weil die Schaltanordnung bei jeder Schaltung in die Neutralstellung und wieder aus dieser heraus geschaltet werden muss.

Eine mechanische Synchronisierung besteht im Wesentlichen aus ersten Reibflächen, z. B. einem Reibkonus am Kupplungskörper und aus diesen gegenüberliegenden zweiten Reibflächen, z. B. einem Gegenkonus an einem Synchronring, der zudem eine Sperrverzahnung aufweist. Der Synchronring läuft mit der Schiebemuffe um, kann sich jedoch zwischen zwei Anschlägen gegenüber dieser um einen begrenzten Drehwinkel drehen, damit eine Sperrverzahnung am Synchronring in Sperrstellung gebracht wird. Bewegt man die Schiebemuffe in Richtung des zu schaltenden Kupplungskörpers, wird der Synchronring mit seinem Gegenkonus über nachgebende Rastmittel gegen den Reibkonus des Kupplungskörpers gedrückt. Dabei verdreht sich der Synchronring relativ zur Schiebemuffe, so dass stirnseitige Schrägflächen der Schaltverzahnung auf entsprechende Sperrflächen der Sperrverzahnung stoßen. Dadurch wird eine Axialkraft auf den Synchronring und die Reibflächen ausgeübt. Die Schaltkraft erzeugt gleichzeitig über die Schrägflächen eine Rückstellkraft auf den Synchronring. Diese überwiegt bei Gleichlauf der Teile die an den Reibflächen wirkende Umfangskraft und bringt den Synchronring in eine freie Durchschaltstellung, bei der die Schiebemuffe durchgeschaltet werden kann.

Eine derartige mechanische Synchronisierung zur Schaltung einer Bereichsgruppe eines Mehrgruppengetriebes ist beispielsweise in der DE 19733519 A1 beschrieben. Gemäß einer dort beschriebenen Ausführung wird der Synchronring zur Aufhebung der Sperrstellung beim Schaltvorgang immer in dieselbe Richtung verdreht. Die Sperrverzahnung ist dazu auf der Stirnseite nur einseitig abgeschrägt, wodurch wiederum die Verzahnung verstärkt ausgeführt werden kann ohne zusätzlichen Bauraum zu benötigen. Eine solche Synchronisierung ist jedoch nur in einer Drehrichtung, nämlich bei Vorwärtsfahrt wirksam, weil der Synchronring mit der einseitig abgeschrägten Sperrverzahnung bei Rückwärtsfahrtschaltungen durch das umgekehrte Drehmoment sofort aus der Sperrstellung in die freie Durchschaltstellung verdreht wird und damit nicht mehr sperrend wirkt, bis der Gleichlauf zwischen den zu kuppelnden Getriebeelementen erreicht ist.

Zum Schalten der Bereichsgruppe eines Mehrgruppengetriebes ist die oben beschriebene Schaltanordnung bislang gut geeignet, weil es üblich ist, die Bereichsgruppe nur bei Vorwärtsfahrt zu schalten. Rückwärtsgänge werden bisher in den eingangs beschriebenen Mehrgruppengetrieben nur durch Schaltungen im Hauptgetriebe, also ohne eine Bereichsschaltung geschaltet. Es gibt nun jedoch Bestrebungen auch beim Rückwärtsfahren Bereichsschaltungen in derartigen Mehrgruppengetrieben vorzunehmen. Da die oben beschriebene mechanische Synchronisierung für die Bereichsgruppe eines Mehrgruppengetriebes jedoch bei Rückwärtsfahrt nicht wirksam ist, treten mit dem herkömmlichen Schaltablauf einer Bereichsschaltung bei Rückwärtsfahrt unerwünschte Ratschgeräusche und ein erhöhter Verschleiß auf.

Um derart synchronisierte Schaltanordnungen auch bei Rückwärtsfahrt störungsfrei zu schalten, kann eine Neutralstellung zwischen den beiden Endstellungen der Schaltanordnung eingerichtet werden. Damit können Bereichsschaltungen auch bei Rückwärtsfahrt störungsfrei durchgeführt werden, indem die Getriebeeingangswelle präzise auf die erforderliche Zieldrehzahl des Zielganges beschleunigt bzw. abgebremst wird, während die Schaltanordnung in der Neutralstellung steht.

Eine Neutralstellung in einem Gruppengetriebe ist z.B. aus der gattungsbildenden Schrift WO 2007/128689 der Anmelderin bekannt. Darin wird eine Splitgruppe vorgeschlagen, die neben dem Hauptgetriebe ebenfalls in eine Neutralposition geschaltet werden kann, um ein Rasselgeräusch im Getriebeleerlauf zu verhindern. Die Splitgruppe kann vor, nach oder gleichzeitig mit dem Hauptgetriebe nach Neutral geschaltet werden. Eine Schaltung nach Neutral kann in Abhängigkeit eines Zeitfaktors und/oder in Abhängigkeit von Getriebe- bzw. Fahrzeugparametern gesteuert werden.

Eine Neutralstellung kann beispielsweise durch die Verwendung eines Dreistellungszylinders zum Betätigen der Schaltschiene realisiert werden, wobei die mittlere Stellung des Dreistellungszylinders der Neutralstellung der Schaltanordnung entspricht. Eine andere Möglichkeit, um eine Neutralstellung zu realisieren, ist die Verwendung einer Rastiereinrichtung für die Neutralstellung, die beispielsweise an einer Schaltschiene der Schaltanordnung angeordnet ist. Eine derartige Rastierung ist aus der DE 102005022995 A1 bekannt. Bei beiden Möglichkeiten kann die Neutralstellung jedoch nur mit einer begrenzten Genauigkeit angefahren bzw. gehalten werden. Dadurch ergeben sich Toleranzbereiche in beiden Bewegungsrichtungen, die bei der Auslegung und Ansteuerung der Schalteinrichtung berücksichtigt werden müssen, um sicher zu stellen, dass die tatsächliche Neutralstellung der Schaltanordnung innerhalb eines vorgegebenen Bereiches liegt, in dem die Schaltvorgänge störungsfrei ablaufen. Die zusätzlichen, durch die Neutralstellung bedingten Toleranzbereiche und damit längeren Wege der Schalt- bzw. Getriebeelemente laufen jedoch dem Bestreben nach einem möglichst kleinen Bauraum und nach kurzen Schaltwegen entgegen.

Es ist die Aufgabe der vorliegenden Erfindung ein Verfahren zum störungsfreien Schalten einer Bereichsgruppe eines Mehrgruppengetriebes bei Vor- und Rückwärtsfahrt zu schaffen, wobei die Schaltanordnung der Bereichsgruppe eine mechanische Synchronisierung aufweist und möglichst wenig Bauraum benötigt. Das Verfahren soll mit einer entsprechenden Schaltanordnung und einem entsprechenden Mehrgruppengetriebe durchgeführt werden, die beide kurze Schaltwege aufweisen und möglichst wenig Bauraum benötigen.

Gelöst wird diese Aufgabe durch ein Verfahren mit den Merkmalen des Patentanspruchs 1. Vorteilhafte Weiterbildungen sind in den abhängigen Ansprüchen beschrieben.

Demnach wird ein Verfahren zum Schalten einer Bereichsgruppe eines Mehrgruppengetriebes mit einem langsamen und einem schnellen Bereich bei Rückwärtsfahrt vorgeschlagen, wobei eine Schaltanordnung der Bereichsgruppe eine mechanische Synchronisierung aufweist. Erfindungsgemäß wird bei Rückwärtsfahrt und Schaltungen in den langsamen Bereich ein Gleichlauf der zu verbindenden Getriebeelemente durch eine geregelte Drehzahlführung der Getriebeeingangswelle mit Hilfe des Antriebsmotors herbeigeführt, wogegen bei Schaltungen in den schnellen Bereich die Getriebeeingangswelle zunächst abgebremst wird, bis unterhalb einer Zieldrehzahl n_{S} und danach der Gleichlauf der zu verbindenden Getriebeelemente durch die mechanische Synchronisierung herbeigeführt wird.

Der Erfindung liegt die Erkenntnis zugrunde, dass die üblicherweise in der Bereichsgruppe von Mehrgruppengetrieben benutzten mechanischen Synchronisierungen nur in einer Fahrtrichtung, nämlich bei Vorwärtsfahrt, wirksam sind. Deshalb ergeben sich mit dem herkömmlichen Schaltablauf, der bisher für Bereichsschaltungen bei Vorwärtsfahrt angewendet wurde, bei Bereichsschaltungen während der Rückwärtsfahrt Probleme. Es kommt zu unerwünschten Ratschgeräuschen und zu erhöhtem Verschleiß. Mit dem erfindungsgemäßen Verfahren werden diese Nachteile beseitigt, weil die notwendige Drehzahlangleichung der zu verbindenden Getriebeteile bei Rückwärtsfahrt auf eine andere Art durchgeführt wird. Das beschriebene Anpassen der Drehzahl der Getriebeeingangswelle wird beispielsweise mit Hilfe von elektronischen Steuereinrichtungen, wie einer Fahrzeug-, Motor- und/oder Getriebesteuerung durch ein Beschleunigen oder Abbremsen der Getriebeeingangswelle gesteuert bzw. geregelt. Auf diese Weise können die bestehenden Vorteile der herkömmlichen mechanischen Synchronisierung bei Vorwärtsfahrt genutzt werden und ein störungsfreier Ablauf der Bereichsschaltungen bei Rückwärtsfahrt ist trotzdem möglich.

Vorzugsweise erfolgt die geregelte Drehzahlführung der Getriebeeingangswelle beim Beschleunigen mit Hilfe des Antriebsmotors und beim Abbremsen der Getriebeeingangswelle mit Hilfe einer Getriebebremse, während sich die Schaltanordnung in einer Neutralstellung befindet, wobei der Antriebsmotor und die Getriebebremse von der Fahrzeug-, Motor- und/oder Getriebesteuerung angesteuert werden.

Eine bevorzugte Ausführung des Verfahrens sieht vor, dass die Neutralstellung innerhalb eines Neutralstellungsbereiches liegt, der sich in axialer Richtung von einem Ausschaltpunkt zwischen einer Schaltverzahnung einer Schiebemuffe und einer Kupplungsverzahnung des langsamen Bereiches bis zu einem Synchronpunkt des schnellen Bereiches erstreckt, wobei der Synchronpunkt bei der Schaltbewegung der Schiebemuffe in Richtung schneller Bereich dann erreicht ist, wenn die Schaltverzahnung der Schiebemuffe auf eine Sperrverzahnung eines Synchronringes trifft, der dem schnellen Bereich zugeordnet ist. Der Ausschaltpunkt zwischen der Schaltverzahnung der Schiebemuffe und der Kupplungsverzahnung an dem Kupplungskörper des langsamen Bereiches ist der Punkt, an dem bei der Bewegung der Schiebemuffe in Richtung schneller Bereich zwischen der Schaltverzahnung und der Kupplungsverzahnung der Berührungskontakt abbricht und ein Abstand in axialer Richtung entsteht.

Da die mechanische Synchronisierung bei Rückwärtsfahrt nur beim Schalten in den schnellen Bereich benutzt wird, wird der Schaltweg, der zur Funktion der mechanischen Synchronisierung notwendig ist, beim Schalten in den langsamen Bereich bei Rückwärtsfahrt nicht benötigt. Dadurch ist es möglich, diesen Schaltweg bzw. diesen Platz anderweitig zu nutzen, beispielsweise als Neutralstellungsbereich. Innerhalb dieses Neutralstellungsbereiches lassen sich auch die Toleranzbereiche abdecken, ohne dass die gesamte Schaltanordnung mehr Bauraum benötigt.

Insbesondere zur Durchführung des beschriebenen Verfahrens wird eine Schaltanordnung zum Schalten einer Bereichsgruppe eines Mehrgruppengetriebes mit einem langsamen und einem schnellen Bereich und mit einer mechanischen Synchronisierung vorgesehen, die eine axial verschiebbare Schiebemuffe mit beidseitig angeordneten Synchronringen mit Sperrverzahnung aufweist. Die Schaltanordnung weist des Weiteren eine Neutralstellungsrastierung auf, mit der die Schaltanordnung in einem Neutralstellungsbereich rastierbar ist, der sich in axialer Richtung erstreckt. Innerhalb dieses Neutralstellungsbereiches ist die Schaltanordnung in einer Neutralstellung zwischen den zwei Endstellungen, die dem langsamen und dem schnellen Bereich entsprechen, rastierbar. Das heißt, dass die Neutralstellung nicht als ein Punkt definiert ist, sondern als ein Bereich in der axialen Bewegungsrichtung der Schiebemuffe. Dies ist innerhalb des vorhandenen Bauraumes einer herkömmlichen Schaltanordnung mit mechanischer Synchronisierung möglich, weil der Weg der Schiebemuffenverzahnung über den Synchronring bei Bereichsschaltungen bei Rückwärtsfahrt in den langsamen Bereich nicht für die Synchronisierung benötigt wird. Bei diesen Bereichsschaltungen wird die Drehzahl der zu verbindenden Getriebeteile erfindungsgemäß allein durch eine präzise Führung der Rotordrehzahl angeglichen.

Bevorzugt erstreckt sich der Neutralstellungsbereich von einem Ausschaltpunkt des langsamen Bereiches bis zu einem Synchronpunkt des schnellen Bereiches. Dabei liegt der Ausschaltpunkt dort, wo die einander zugewandten Enden einer Schaltverzahnung der Schiebemuffe und einer Kupplungsverzahnung eines dem langsamen Bereich zugeordneten Kupplungskörpers bei radialer Blickrichtung auf einer Linie liegen, und der Synchronpunkt liegt dort, wo die Schaltverzahnung der Schiebemuffe bei der Schaltbewegung der Schiebemuffe in Richtung des schnellen Bereiches auf die Sperrverzahnung des dem schnellen Bereich zugeordneten Synchronringes trifft.

Die für das Verfahren vorgesehene Schaltanordnung ist gemäß einer weiteren bevorzugten Ausführung automatisiert betätigbar. Dazu sind Betätigungsaktuatoren der Schaltanordnung von einer elektronischen Steuereinrichtung in Abhängigkeit von erfassten und der Steuereinrichtung zugeführten Drehzahlwerten an antriebsseitigen und abtriebsseitigen Getriebeelementen ansteuerbar.

Die Neutralstellungsrastierung ist vorzugsweise gesteuert ein- und ausschaltbar. Dazu ist die Neutralstellungsrastierung von einer elektronischen Steuereinrichtung in Abhängigkeit von erfassten und der Steuereinrichtung zugeführten Drehzahlwerten an den antriebsseitigen und den abtriebsseitigen Getriebeelementen ein- und ausschaltbar. Auf diese Weise ist es möglich, die Neutralstellungsrastierung nur in den Phasen einzuschalten, in denen sie benötigt wird, nämlich bei Bereichsschaltungen bei Rückwärtsfahrt. In allen anderen Betriebsphasen kann die Neutralstellungsrastierung unwirksam bzw. ausgeschaltet sein. Bei herkömmlichen Rastierungen wirkt ein vorgespanntes Rastierelement dauernd und bei allen Schaltungen bremsend gegenüber der Betätigungskraft bei Bereichschaltungen. Demgegenüber können die Schaltkräfte durch das erfindungsgemäße Verfahren insgesamt gering gehalten werden, weil bei Schaltungen bei Vorwärtsfahrt keine Rastierkräfte überwunden werden müssen. So können die Betätigungskraft, die Betätigungsenergie und der Verschleiß der Schaltelemente gering gehalten werden.

Eine Ausführung der für das Verfahren vorgesehenen Schaltanordnung weist eine Neutralstellungsrastierung mit einem Rastelement auf, welches zum Zwecke der Rastierung formschlüssig in eine Vertiefung einer zur Schaltanordnung gehörenden Schaltschiene eingreift. Zur Verwirklichung des Rastierstellungsbereiches hat die Vertiefung in der Schaltschiene eine gewisse Ausdehnung in Betätigungsrichtung, so dass das eingerückte Rastelement im rastierten Zustand die Schaltanordnung nicht auf eine feste Neutralstellung festlegt, sondern einen bestimmten Bereich als Neutralstellungsbereich offen lässt.

Die Erfindung eignet sich insbesondere für automatisierte Stufengetriebe, bei denen die Schaltung durch pneumatische oder hydraulische Stellglieder betätigt wird.

Mit Hilfe der nachfolgenden Figuren wird die Erfindung und weitere Vorteile näher erläutert. Dabei zeigen
- Figur 1: den Drehzahlverlauf der Getriebeeingangswelle bei Bereichsschaltungen nach dem erfindungsgemäßen Verfahren,
- Figur 2: eine teilweise Abwicklung eines Zylinderschnitts im Bereich der Schaltverzahnung der Schiebemuffe und der Kupplungsverzahnungen der Kupplungskörper einer erfindungsgemäßen Schaltanordnung in mittiger Neutralstellung,
- Figur 3: die teilweise Abwicklung aus Fig. 2, wobei sich die Schiebemuffe am Synchronpunkt in Richtung schneller Bereich befindet,
- Figur 4: die teilweise Abwicklung aus Fig. 2, wobei sich die Schiebemuffe am Durchschaltpunkt in Richtung schneller Bereich befindet,
- Figur 5: die teilweise Abwicklung aus Fig. 2, wobei sich die Schiebemuffe am Ausschaltpunkt zwischen der Schaltverzahnung der Schiebemuffe und der Kupplungverzahnung des langsamen Bereiches befindet und
- Figur 6: einen Ausschnitt aus einer Schaltanordnung in Neutralstellung bei eingeschalteter Neutralstellungsrastierung.

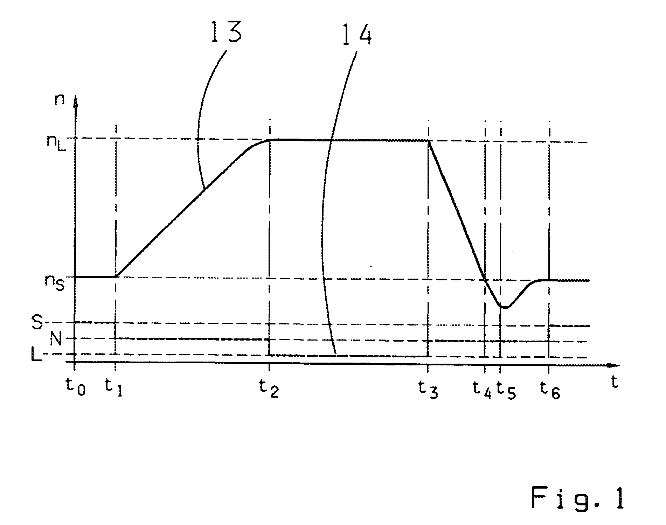

Das Diagramm in Fig. 1 zeigt anhand der durchgezogenen Linie den Drehzahlverlauf 13 der Getriebeeingangswelle während eines Schaltvorganges bei Rückwärtsfahrt vom schnellen in den langsamen Bereich der Bereichsgruppe eines Mehrgruppengetriebes und während eines anschließenden Schaltvorganges vom langsamen in den schnellen Bereich.

Auf der waagerechten Achse ist die Zeit aufgetragen, mit einigen definierten Zeitpunkten tᵢ, die im Folgenden einzeln erläutert werden. Die senkrechte Achse stellt einen relativen Drehzahlwert dar.

Die gestrichelte Linie 14 zeigt die Stellung der Schaltanordnung zum jeweiligen Zeitpunkt. Die Stellung der Schaltanordnung kann zwischen einer Endstellung für den schnellen Bereich S, einer Neutralstellung N und einer Endstellung für den langsamen Bereich L wechseln.

Zum Zeitpunkt t0 wird die Bereichsgruppe im schnellen Bereich betrieben und die Schaltanordnung steht in der Endstellung S. Die Getriebeeingangswelle dreht mit der verhältnismäßig niedrigen Drehzahl nₛ. Zum Zeitpunkt t1 wird die Schaltanordnung der Bereichsgruppe in die Neutralstellung geschaltet und mit Hilfe des Antriebsmotors wird die Getriebeeingangswelle in Richtung Zieldrehzahl n_{L} für den langsamen Bereich beschleunigt. Das dargestellte Beispiel zeigt einen etwa linearen Drehzahlanstieg zwischen den Zeitpunkten t1 und t2. Kurz vor dem Erreichen der Zieldrehzahl n_{L} wird die Steigung des Dreh-zahlanstieges geringer, um die Zieldrehzahl mit der erforderlichen Genauigkeit zu erreichen. Der Drehzahlanstieg der Getriebeeingangswelle zwischen den Punkten t1 und t2 kann auch einen anderen Verlauf und eine andere Steigung aufweisen, abhängig von der Drehmomentkurve des Antriebsmotors und von möglichen Kupplungsbetätigungen und Schaltabläufen in der Splitgruppe und in der Hauptgruppe des Mehrgruppengetriebes. Der Verlauf des Drehzahlanstieges wird vorteilhaft durch Steuerungseingriffe in die Motorsteuerung beeinflusst und durch Drehzahlsensoren überwacht.

Der Drehzahlanstieg der Getriebeeingangswelle kann bei einer als Planetengetriebe ausgeführten Bereichsgruppe auch zu einem Drehzahlrückgang an einem der zu verbindenden Getriebeelemente auf die Drehzahl Null führen. Dies ist beispielsweise dann der Fall, wenn die Kupplungsverzahnung des langsamen Bereiches gehäusefest angeordnet ist, weil beim Betrieb im langsamen Bereich ein Getriebeelement des Planetengetriebes, z.B. das Hohlrad, über die Schiebemuffe gehäusefest gehalten wird. In dieser Ausführung führt die Zieldrehzahl n_{L} der Getriebeeingangswelle bei Bereichsschaltungen in Richtung langsamer Bereich zum Stillstand der zu verbindenden Getriebeelemente Schiebemuffe und Kupplungskörper.

Sobald zum Zeitpunkt t2 der Gleichlauf bzw. der Stillstand der in der Bereichsgruppe zu verbindenden Getriebeelemente erreicht ist, wird die Schaltanordnung von der Neutralstellung N in die Endstellung für den langsamen Bereich L geschaltet. Dabei wird die Schiebemuffe aus einer mittleren Neutralstellung in die entsprechende Endstellung L verschoben, sodass die Schaltverzahnung 20 der Schiebemuffe mit der Kupplungsverzahnung 23 des langsamen Bereiches in Eingriff kommt.

Die antriebsseitige Drehzahl der Bereichsgruppe wird mit Hilfe des Antriebsmotors bis zum Zeitpunkt t2 genau auf die Zieldrehzahl beschleunigt, sodass das Schalten der Schaltanordnung der Bereichsgruppe in den langsamen Bereich ohne mechanische Synchroneinrichtung störungsfrei durchgeführt werden kann. Dies ist notwendig, weil die herkömmliche, mechanische Synchronisierung bei Rückwärtsfahrt in dieser Drehrichtung nicht wirksam ist.

Der Drehzahlverlauf der Getriebeeingangswelle bei Schaltungen in den schnellen Bereich ist im Diagramm in Fig. 1 ab dem Zeitpunkt t3 dargestellt.

Obwohl die mechanische Synchronisierung bei Bereichsschaltung in Richtung des schnellen Bereiches bei Rückwärtsfahrt nicht wirksam ist, ist ein bestimmter Schaltweg, der für die mechanische Synchronisierung bei Vorwärtsfahrt notwendig ist, auch bei Rückwärtsfahrtschaltungen vorhanden. Dieser Schaltweg wird bei Rückwärtsfahrtschaltungen in Richtung schneller Bereich als Neutraistellungsbereich genutzt. Auf diese Weise wird trotz der, für den erfindungsgemäßen Schaltablauf bei Rückwärtsfahrt notwendigen Neutralstellung nicht mehr Bauraum benötigt als bei einer herkömmlichen synchronisierten Schaltanordnung, die nurfürVorwärtsfahrtscha!tungen störungsfrei verwendbar ist.

Vom Zeitpunkt t2 bis zum Zeitpunkt t3 wird die Bereichsgruppe im langsamen Bereich betrieben. Zum Zeitpunkt t3 wird die Schaltanordnung der Bereichsgruppe in die Neutralstellung N geschaltet und die Drehzahl der antriebsseitigen Drehmassen werden beispielsweise mit einer Getriebebremse im Hauptgetriebe abgebremst. Weil eine hinreichend genaue Drehzahlführung der antriebsseitigen Drehmassen auf die Zieldrehzahl n_{S} mittels einer Getriebebremse allein nicht möglich ist, und weil die mechanische Synchronisierung bei Rückwärtsfahrt in dieser Drehrichtung nicht wirksam ist, werden die antriebsseitigen Drehmassen beim Schalten in den schnellen Bereich bis unterhalb der Zieldrehzahl n_{S} abgebremst, um danach mit Hilfe der mechanischen Synchronisierung genau auf die Zieldrehzahl n_{S} beschleunigt zu werden. Durch das Abbremsen der antriebsseitigen Drehmassen bis unterhalb der Zieldrehzahl n_{S} wird die Drehrichtung zwischen der Schiebemuffe mit Synchronring und dem Kupplungskörper umgedreht, so dass die mechanische Synchronisierung trotz Rückwärtsfahrt wirksam ist und die Drehzahlen der zu verbindenden Getriebeelemente durch die mechanische Synchronisierung aneinander angeglichen werden.

Im Diagramm markiert t4 den Zeitpunkt, zu dem die Drehzahl der Getriebeeingangswelle unterhalb der Zieldrehzahl n_{S} sinkt. Zu diesem Zeitpunkt wird die Drehrichtung zwischen der Schiebemuffe mit Synchronring und dem Kupplungskörper umgedreht. Kurz nach dem Zeitpunkt t4 wird die Getriebebremse ausgeschaltet und die mechanische Synchronisierung beginnt beschleunigend auf die antriebsseitigen Drehmassen zu wirken, so dass sich der Drehzahlrückgang zum Zeitpunkt t5 umkehrt in einen Drehzahlanstieg in Richtung Zieldrehzahl n_{S}. Diese Zieldrehzahl n_{S} wird mit Hilfe der mechanischen Synchronisierung zum Zeitpunkt t6 erreicht.

Zum Zeitpunkt t6 wird die Schaltungsanordnung von der Neutralstellung in die Endstellung S des schnellen Bereiches geschaltet. Dabei wird die Schiebemuffe aus einer mittleren Neutralstellung in die entsprechende Endstellung S verschoben, sodass die Schaftverzahnung der Schiebemuffe mit der Kupplungsverzahnung des langsamen Bereiches in Eingriff kommt.

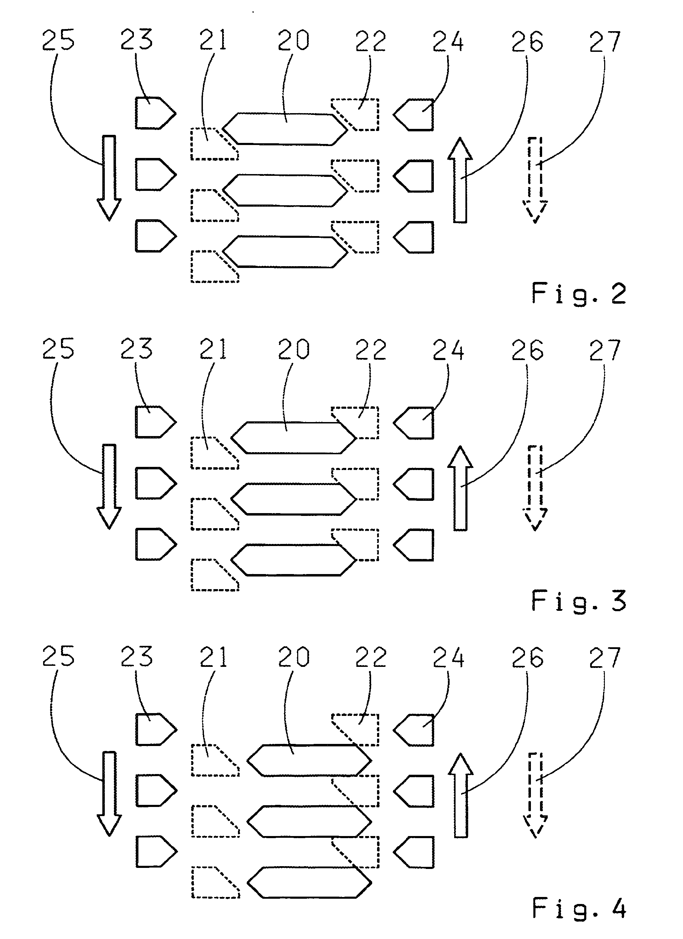

Die Fig. 2 bis 5 zeigen eine teilweise Abwicklung eines Zylinderschnitts einer erfindungsgemäßen Schaltanordnung im Bereich der Schaltverzahnung 20 der Schiebemuffe, der Sperrverzahnungen 21, 22 der Synchronringe und der Kupplungsverzahnungen 23, 24 der Kupplungskörper. Die Pfeile 25 und 26 zeigen jeweils die relative Drehrichtung der Kupplungsverzahnungen 23 und 24 im Bezug auf die Schaltverzahnung 20 der Schiebemuffe bei Rückwärtsfahrt an.

In Fig. 2 steht die Schaltanordnung in einer mittigen Neutralstellung, In dieser Stellung findet keine Drehmomentübertragung über die Bereichsgruppe statt. Die Synchronringe mit Sperrverzahnung 21, 22 rotieren gemeinsam mit der Schiebemuffe. Die Synchronringe sind in Umfangsrichtung um einen bestimmten Winkel zur Schiebemuffe verdrehbar, sodass die Sperrverzahnung 21, 22 der Synchronringe den Schaltweg für die Schaltverzahnung 20 der Schiebemuffe in die jeweilige Schaltrichtung freigeben können. Dies geschieht, wenn die schrägen Stirnflächen der Schaftverzahnung 20 durch die axial wirkende Betätigungskraft gegen die einseitig abgeschrägten Stirnflächen der Sperrverzahnung 21, 22 gedrückt werden, aneinander abgleiten und der Synchronring in die entsprechende Richtung verdreht wird, bis die Durchschaltstellung erreicht ist.

Bei Rückwärtsfahrt rotiert die dem langsamen Bereich zugeordnete Kupplungsverzahnung 23 im Bezug zur Schaltverzahnung 20 in der Drehrichtung 25. Die dem schnellen Bereich zugeordnete Kupplungsverzahnung 24 rotiert im Bezug zur Schaltverzahnung 20 bei Rückwärtsfahrt in die Drehrichtung 26. Eine Betätigung der Schiebemuffe aus dieser Neutralstellung in eine der beiden Richtungen bewirkt, dass der jeweilige Synchronring mit Sperrverzahnung 23, 24 durch das Reibmoment an den Reibflächen in die Durchschaltstellung verdreht wird, ohne dass eine für die Synchronisierung notwendige Sperrwirkung eintritt. Aus diesem Grund ist diese mechanische Synchronisierung bei Rückwärtsfahrt nicht wirksam.

In Fig. 3 ist eine Betätigung der Schiebemuffe in Richtung der Kupplungsverzahnung 24 des schnellen Bereiches am Synchronpunkt dargestellt, wobei der Synchronpunkt bei der Schaltbewegung der Schiebemuffe in Richtung des schnellen Bereiches erreicht ist, wenn die Schaltverzahnung 20 der Schiebemuffe mit ihrer stirnseitigen Schrägfläche auf eine entsprechende Schrägflache an der Sperrverzahnung 22 des Synchronringes trifft, der dem schnellen Bereich zugeordnet ist. Der Synchronring mit der Sperrverzahnung 22 wird mit einer nicht dargestellten Reibfläche auf eine Reibfläche des entsprechenden Kupplungskörpers gedrückt. Die relative Drehrichtung des Kupplungskörpers mit der Kupplungsverzahnung 24 bewirkt nun, dass der Synchronring mit der Sperrverzahnung 22 in die Durchschaltstellung verdreht wird, ohne dass eine für die Synchronisierung notwendige Sperrwirkung eintritt. Deshalb muss die Drehrichtung zwischen der Schiebemuffe und dem Kupplungskörper bei Schaltungen bei Rückwärtsfahrt in Richtung schneller Bereich zunächst umgekehrt werden, indem die Drehzahl der Getriebeeingangswelle mittels einer Getriebebremse bis unterhalb der Zieldrehzahl abgebremst wird. Dadurch kehrt sich die Drehrichtung 26 der Kupplungsverzahnung 24 aus der Sicht mit Schaltverzahnung 20 um in die Drehrichtung 27.

Wird nun die Schiebemuffe mit der Schaltverzahnung 20 in Richtung schneller Bereich betätigt, so bewirkt das über die Reibflächen des Synchronringes und des in Drehrichtung 27 rotierenden Kupplungskörpers erzeugte Reibmoment, dass die Sperrverzahnung 22 mit dem Synchronring in der Sperrstellung gehalten wird, bis die Drehzahldifferenz zwischen Synchronring und Kupplungskörper ausgeglichen ist und das Reibmoment gegen Null geht. Erst dann wird der Synchronring durch die Betätigungskraft an der Schiebemuffe über die stirnseitigen Schrägflächen der Schaltverzahnung 20 und der Sperrverzahnung 22 in die Durchschaltstellung verdreht. Die Durchschaltstellung ist in Fig. 4 dargestellt.

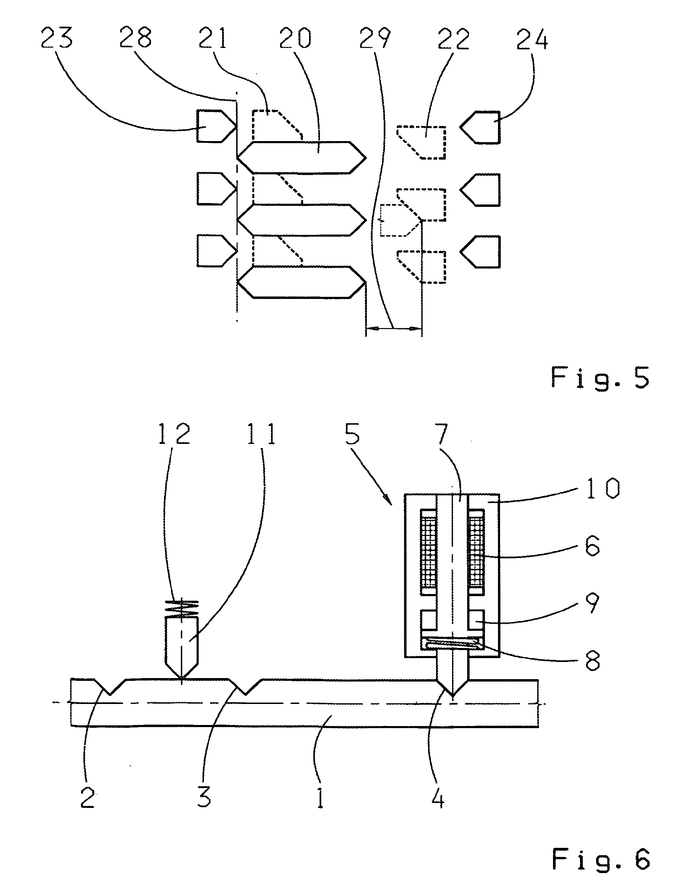

Die Drehzahlangleichung bei Bereichsschaltungen bei Rückwärtsfahrt in den langsamen Bereich erfolgt erfindungsgemäß vollständig durch eine präzise Drehzahlführung der Getriebeeingangswelle mit Hilfe der Führung der Motordrehzahl, Die mechanische Synchronisierung wird dazu nicht benutzt. Deshalb kann ein Teil des Schaltweges in Richtung langsamer Bereich als Neutralstellungsbereich 29 genutzt werden, wie oben beschrieben. Der Neutralstellungsbereich 29 ist in Fig. 5 dargestellt. Er erstreckt sich in axialer Richtung von einem durch die Linie 28 markierten Ausschaltpunkt bis zum Synchronpunkt auf der Seite des schnellen Bereichs. Der Ausschaltpunkt ist durch die Linie 28 gekennzeichnet und liegt dort, wo die einander zugewandten Enden der Schaltverzahnung 20 der Schiebemuffe und der Kupplungsverzahnung 23 des dem langsamen Bereich zugeordneten Kupplungskörpers bei radialer Blickrichtung auf der Linie 28 liegen.

Der Synchronpunkt ist bei der Schaltbewegung der Schiebemuffe in Richtung des schnellen Bereiches dann erreicht, wenn die Schaltverzahnung 20 der Schiebemuffe auf die Sperrverzahnung 22 des Synchronringes trifft, der dem schnellen Bereich zugeordnet ist.

In der Fig. 6 ist ein Ausschnitt einer Schaltanordnung mit einer Neutralstellungsrastierung 5 dargestellt, die zur Durchführung des erfindungsgemäßen Verfahrens geeignet ist. Die dargestellte Schaltanordnung kann in einer Neutralstellung rastiert werden und wird selbstständig in zwei Endstellungen rastiert. Dazu ist eine Schaltschiene 1 mit drei Vertiefungen 2, 3 und 4 versehen, die die jeweiligen Raststellungen vorgeben. Fig. 6 zeigt die Schaltanordnung in der Neutralstellung und mit eingeschalteter und eingerückter Neutralstellungsrastierung 5. Die Schaltschiene 1 wird von der Neutralstellungsrastierung 5 in einer mittleren Stellung, der Neutralstellung gehalten. Die Neutralstellung der Schaltschiene 1 entspricht auch der Neutralstellung einer nicht dargestellten Schiebemuffe der Schaltanordnung.

Die Neutralstellung ist durch eine Vertiefung 4 in der Schaltschiene 1 in Verbindung mit einem in diese Vertiefung 4 formschlüssig eingreifenden Rastelement 7 rastierbar. Mögliche toleranzbedingte Abweichungen der Neutralstellung liegen innerhalb des Neutralstellungsbereiches 29. Das Rastelement 7 ist Teil der Neutralstellungsrastierung 5. Die Neutralstellungsrastierung 5 besteht im Wesentlichen aus einem Gehäuse 10, aus einem elektromagnetischen Aktuator 6, aus dem Rastelement 7 mit einem Mitnehmerbund 9 und aus einer Rückhaltefeder 8.

Die Neutralstellungsrastierung 5 ist über nicht dargestellte signalübertragende Steuerleitungen mit einer ebenfalls nicht dargestellten elektronischen Getriebesteuerung verbunden und kann so durch den elektromagnetischen Aktuator 6 betätigt bzw. ein- und ausgeschaltet werden. Im eingeschalteten Zustand drückt der Aktuator 6 das Rastelement 7 mit dessen unterem Ende entgegen der Kraft der Rückhaltefeder 8 in die Vertiefung 4 der Schaltschiene 1 und rastiert so die gesamte Schaltanordnung in der Neutralstellung. Diese Art der Betätigung ermöglicht es die Neutralstellungsrastierung während der Vorwärtsfahrt ausgeschaltet zu lassen. Da die Neutralstellungsrastierung erfindungsgemäß nur bei Bereichsschaltungen während der Rückwärtsfahrt erforderlich ist, können Bereichsschaltungen bei Vorwärtsfahrt unbeeinflusst von der Neutralstellungsrastierung erfolgen. So können die Schaltkräfte und Verschleiß bei Bereichsschaltungen während der Vorwärtsfahrt gering gehalten werden, weil dabei keine Rastierkräfte überwunden werden müssen.

Die Endstellungen der Schaltanordnung entsprechen dem jeweils eingelegten langsamen bzw. schnellen Bereich. Sie werden rastiert, indem ein federbelastetes Rastelement 11 formschlüssig in eine der jeweiligen Endstellung zugeordnete Vertiefung 2 bzw. 3 in der Schaltschiene 1 eingreift. Im Gegensatz zu der Neutralstellungsrastierung 5 drückt das durch die Rastierfeder 12 federbelastete Rastelement 11 für die Rastierung der Endstellungen dauernd auf die Schaltschiene 1. Die Rastierfeder 12 stützt sich gegenüber dem Rastelement 11 an einem ortsfesten Bauteil des Getriebegehäuses ab.

### Bezugszeichen

- 1: Schaltschiene
- 2: Vertiefung
- 3: Vertiefung
- 4: Vertiefung
- 5: Neutralstellungsrastierung
- 6: Aktuator
- 7: Rastelement
- 8: Rückhaltefeder
- 9: Mitnahmebund
- 10: Gehäuse
- 11: Rastelement
- 12: Rastierfeder
- 13: Drehzahllinie
- 14: Schaltstellung
- 20: Schaltverzahnung
- 21: Sperrverzahnung
- 22: Sperrverzahnung
- 23: Kupplungsverzahnung
- 24: Kupplungsverzahnung
- 25: Drehrichtungspfeil
- 26: Drehrichtungspfeil
- 27: Drehrichtungspfeil
- 28: Linie
- 29: Neutralstellungsbereich
- S: Eredstellung schneller Bereich
- N: Neutralstellung
- L: Endstellung langsamer Bereich
- n: Drehzahl
- n_{L}: Zieldrehzahl langsamer Bereich
- n_{S}: Zieldrehzahl schneller Bereich
- t: Zeit
- t1 - t6: Zeitpunkte im Schaltverlauf

## Patentansprüche

1. Verfahren zum Schalten einer Bereichsgruppe eines Mehrgruppengetriebes mit einem langsamen und einem schnellen Bereich bei Rückwärtsfahrt, wobei eine Schaltanordnung der Bereichsgruppe eine mechanische Synchronisierung aufweist, **dadurch gekennzeichnet, dass** bei Schaltungen in den langsamen Bereich ein Gleichlauf der zu verbindenden Getriebeelemente durch eine geregelte Drehzahlführung der Getriebeeingangswelle mit Hilfe des Antriebsmotors herbeigeführt wird, und dass bei Schaltungen in den schnellen Bereich die Getriebeeingangswelle zunächst abgebremst wird bis unterhalb einer Zieldrehzahl nₛ, und dass danach der Gleichlauf der zu verbindenden Getriebeelemente bei Zieldrehzahl nₛ durch die mechanische Synchronisierung herbeigeführt wird.

2. Verfahren nach Anspruch 1, **dadurch gekennzeichnet, dass** die geregelte Drehzahlführung der Getriebeeingangswelle mit Hilfe des Antriebsmotors und das Abbremsen der Getriebeeingangswelle mit Hilfe einer Getriebebremse jeweils durchgeführt werden, während sich die Schaltanordnung in einer Neutralstellung befindet.

3. Verfahren nach Anspruch 1 oder 2, **dadurch gekennzeichnet, dass** die Neutralstellung innerhalb eines Neutralstellungsbereiches liegt, der sich in axialer Richtung von einem Ausschaltpunkt zwischen einer Schaltverzahnung einer Schiebemuffe und einer Kupplungsverzahnung des langsamen Bereiches bis zu einem Synchronpunkt des schnellen Bereiches erstreckt, wobei der Synchronpunkt bei der Schaltbewegung der Schiebemuffe in Richtung des schnellen Bereiches dann erreicht ist, wenn die Schaltverzahnung der Schiebemuffe auf eine Sperrverzahnung eines Synchronringes trifft, der dem schnellen Bereich zugeordnet ist.

4. Verfahren nach Anspruch 3, **dadurch gekennzeichnet, dass** innerhalb des Neutralstellungsbereiches die Schaltanordnung in der Neutralstellung durch eine Neutralstellungsrastierung rastiert wird.

5. Verfahren nach Anspruch 4, **dadurch gekennzeichnet, dass** die Neutralstellungsrastierung gesteuert ein- und ausgeschaltet wird, so dass sie nur in Betriebsphasen eingeschaltet wird, in denen die Neutralstellungsrastierung benötigt wird, und in allen anderen Betriebsphasen unwirksam bzw. ausgeschaltet wird.

6. Verfahren nach einem der vorangehenden Ansprüche, dadurch **gek ennzeichnet**, dass die Schaltanordnung automatisiert betätigt wird, und dass Betätigungsaktuatoren der Schaltanordnung von einer elektronischen Steuereinrichtung in Abhängigkeit von erfassten und der Steuereinrichtung zugeführten Drehzahlwerten an antriebsseitigen und abtriebsseitigen Getriebeelementen angesteuert werden.

7. Verfahren nach Anspruch 6, **dadurch gekennzeichnet, dass** die Neutralstellungsrastierung (5) von der elektronischen Steuereinrichtung in Abhängigkeit von erfassten und der Steuereinrichtung zugeführten Drehzahlwerten an den antriebsseitigen und den abtriebsseitigen Getriebeelementen ein- und ausgeschaltet wird.

8. Verfahren nach einem der Ansprüche 4 bis 7, dadurch **gekennze ichnet**, dass von einem Rastelement (7), welches die Neutralstellungsrastierung (5) aufweist, zum Zwecke der Rastierung formschlüssig in eine Vertiefung (4) einer zur Schaltanordnung gehörenden Schaltschiene (1) eingegriffen wird.

## Claims

1. Method for shifting a range group of a multi-group transmission having a slow and a fast range for reversing, wherein a shift arrangement of the range group has a mechanical synchronization device, **characterized in that** in the case of shifting operations into the slow range the transmission elements to be connected are synchronized by controlled adjustment of the rotational speed of the transmission input shaft using the drive motor and **in that** in the case of shifting operations into the fast range the transmission input shaft is firstly braked to below a target rotational speed nₛ, and **in that** afterwards the transmission elements to be connected are synchronized at target rotational speed nₛ by means of the mechanical synchronization device.

2. Method according to Claim 1, **characterized in that** the controlled adjustment of the rotational speed of the transmission input shaft is carried out using the drive motor, and the braking of the transmission input shaft is carried out in each case using a transmission brake, while the shift arrangement is in a neutral position.

3. Method according to Claim 1 or 2, **characterized in that** the neutral position is within a neutral position range which extends in the axial direction from a switch-off point between a shift toothing arrangement of a sliding sleeve and a clutch toothing arrangement of the slow range up to a synchronization point of the fast range, wherein during the shifting movement of the sliding sleeve the synchronization point is reached in the direction of the fast range when the shift toothing arrangement of the sliding sleeve impacts against a blocking toothing arrangement of a synchronization ring which is assigned to the fast range.

4. Method according to Claim 3, **characterized in that** within the neutral position range the shift arrangement is latched in the neutral position by a neutral position latching device.

5. Method according to Claim 4, **characterized in that** the neutral position latching device is switched on and off in a controlled fashion with the result that it is switched on only in operating phases in which the neutral position latching device is required, and is ineffective or switched off in all the other operating phases.

6. Method according to one of the preceding claims, **characterized in that** the shift arrangement is activated in an automated fashion, and **in that** activation actuators of the shift arrangement are actuated by an electronic control device as a function of sensed rotational speed values which are fed to the control device, at drive-side and output-side transmission elements.

7. Method according to Claim 6, **characterized in that** the neutral position latching device (5) is switched on and off by the electronic control device as a function of sensed rotational speed values which are fed to the control device, at the drive-side and the output-side transmission elements.

8. Method according to one of Claims 4 to 7, **characterized in that** a latching element (7), which has the neutral position latching device (5), engages positively in a depression (4) in a shift rail (1) associated with the shift arrangement, for the purpose of latching.

## Revendications

1. Procédé de changement de rapport d'un groupe de gammes d'une boîte de vitesses à plusieurs groupes comprenant une gamme lente et une gamme rapide en marche arrière, un arrangement de changement de rapport du groupe de gammes présentant une synchronisation mécanique, **caractérisé en ce que** lors des changements de rapport dans la gamme lente, un synchronisme des éléments de boîte de vitesse à relier est accompli par une commande en vitesse de rotation régulée de l'arbre d'entrée de la boîte de vitesses à l'aide du moteur d'entraînement, et **en ce que** lors des changements de rapport dans la gamme rapide, l'arbre d'entrée de la boîte de vitesses est tout d'abord freiné jusqu'au-dessous d'une vitesse de rotation cible nₛ, et **en ce qu'**ensuite, le synchronisme des éléments de boîte de vitesse à relier à la vitesse de rotation cible nₛ est accompli par la synchronisation mécanique.

2. Procédé selon la revendication 1, **caractérisé en ce que** la commande en vitesse de rotation régulée de l'arbre d'entrée de la boîte de vitesses à l'aide du moteur d'entraînement et le freinage de l'arbre d'entrée de la boîte de vitesses à l'aide d'un frein de boîte de vitesses sont respectivement effectués pendant que l'arrangement de changement de rapport se trouve dans une position neutre.

3. Procédé selon la revendication 1 ou 2, **caractérisé en ce que** la position neutre se trouve à l'intérieur d'une zone de position neutre qui s'étend dans le sens axial depuis un point de sortie de contact entre une denture de changement de rapport d'un manchon coulissant et une denture d'accouplement de la gamme lente jusqu'à un point de synchronisation de la gamme rapide, le point de synchronisation étant atteint lors du mouvement de changement de rapport du manchon coulissant en direction de la gamme rapide lorsque la denture de changement de rapport du manchon coulissant vient en prise avec une denture de blocage d'une bague de synchronisation qui est affectée à la gamme rapide.

4. Procédé selon la revendication 3, **caractérisé en ce qu'**à l'intérieur de la zone de position neutre, l'arrangement de changement de rapport est enclenché dans la position neutre par un enclenchement de position neutre.

5. Procédé selon la revendication 4, **caractérisé en ce que** l'enclenchement de position neutre est mis en service et hors service de manière commandée, de sorte qu'il n'est mis en service que dans les phases opérationnelles dans lesquelles l'enclenchement de position neutre est nécessaire et rendu inactif ou mis hors service dans toutes les autres phases opérationnelles.

6. Procédé selon l'une des revendications précédentes, **caractérisé en ce que** l'arrangement de changement de rapport est actionné de manière automatisée et **en ce que** des actionneurs d'actionnement de l'arrangement de changement de rapport sont commandés par un dispositif de commande électronique en fonction de valeurs de la vitesse de rotation sur les éléments de boîte de vitesses côté moteur et côté mené, détectées et acheminées au dispositif de commande.

7. Procédé selon la revendication 6, **caractérisé en ce que** l'enclenchement de position neutre (5) est mis en service et hors service par le dispositif de commande électronique en fonction de valeurs de la vitesse de rotation sur les éléments de boîte de vitesses côté moteur et côté mené, détectées et acheminées au dispositif de commande.

8. Procédé selon l'une des revendications 4 à 7, **caractérisé en ce qu'**un élément d'enclenchement (7), lequel présente l'enclenchement de position neutre (5), vient en prise par complémentarité de forme en vue de l'enclenchement dans un enfoncement (4) d'une tringle de changement de rapport (1) appartenant à l'arrangement de changement de rapport.
